Europäisches Patentamt

European Patent Office

Office européen des brevets

(19)

(11) **EP 0 808 467 B1**

(12) **FASCICULE DE BREVET EUROPEEN**

(45) Date de publication et mention
de la délivrance du brevet:
**20.12.2000 Bulletin 2000/51**

(21) Numéro de dépôt: **96931107.5**

(22) Date de dépôt: **11.09.1996**

(51) Int Cl.⁷: $G01V\ 1/30$, $G01V\ 3/38$

(86) Numéro de dépôt international:
**PCT/FR96/01396**

(87) Numéro de publication internationale:
**WO 97/11392 (27.03.1997 Gazette 1997/14)**

(54) **METHODE DE RECONNAISSANCE AUTOMATIQUE DE FACIES SISMIQUES**

VERFAHREN ZUR AUTOMATISCHEN ERKENNUNG VON SEISMISCHEN KENMERKEN

AUTOMATIC SEISMIC PATTERN RECOGNITION METHOD

(84) Etats contractants désignés:
**FR GB IT NL**

(30) Priorité: **19.09.1995 FR 9510962**

(43) Date de publication de la demande:
**26.11.1997 Bulletin 1997/48**

(73) Titulaire: **ELF AQUITAINE PRODUCTION**
**92400 Courbevoie (FR)**

(72) Inventeur: **KESKES, Naamen**
**F-64000 Pau (FR)**

(74) Mandataire: **Levy, David et al**
**c/o S.A. FEDIT-LORIOT & AUTRES**
**CONSEILS EN PROPRIETE INDUSTRIELLE**
**38, Avenue Hoche**
**75008 Paris (FR)**

(56) Documents cités:
• **PROCEEDINGS OF SPIE: APPLICATIONS OF ARTIFICIAL NEURAL NETWORKS III, vol. 1709, no. 2, 21 - 24 Avril 1992, ORLANDO, FLORIDA, USA, pages 963-972, XP000574625 JO ANN PARIKH ET AL.: "Selective detection of linear features in geological remote sensing data"**
• **PROC. SPIE: APPLICATIONS OF ARTIFICIAL NEURAL NETWORKS III, vol. 1709, no. 2, 21 - 24 Avril 1992, ORLANDO, FLORIDA, USA, pages 950-958, XP000574639 MAURER ET AL.: "Seismic event interpretation using self-organizing neural networks"**
• **IJCNN INTERNATIONAL JOINT CONFERENCE ON NEURAL NETWORKS, vol. 3, 7 - 11 Juin 1992, BALTIMORE , MARYLAND, USA, pages 736-741, XP000340442 HUANG, YANG: "A hybrid neural network for seismic pattern recognition"**
• **De Groot et al., "Seismic reservoir characterisation in 'total space'; a Middle Eastern example" in proceedings of "New Technologies applied to hydrocarbon production", Delft, The Netherlands, 12-15 September 1995.**

Remarques:
Le dossier contient des informations techniques présentées postérieurement au dépôt de la demande et ne figurant pas dans le présent fascicule.

**Description**

La présente invention concerne une méthode de reconnaissance automatique de faciès sismiques entre deux horizons ou autour d'un horizon d'une zone géologique et notamment entre deux horizons ou autour d'un horizon définis sur une section sismique associée à ladite zone géologique.

Actuellement, la quasi totalité des interprétations géologiques ou géophysiques relatives aux faciès sismiques est réalisée sur une station d'interprétation et relève de la spécialité dite stratigraphie sismique.

En stratigraphie sismique, il est d'usage d'identifier et de représenter sur une carte (cartographier) les variations de faciès sismique dans une tranche donnée de la zone géologique à étudier, ladite tranche pouvant être ou non entre deux horizons marqués.

Une unité de faciès sismique est un groupe de réflexions sismiques dont la configuration, la forme externe et les paramètres internes sont différents d'une unité de faciès à l'autre et même entre deux unités de faciès adjacentes ou consécutives.

La définition des unités de faciès sismique est habituellement réalisée en étudiant trois familles de paramètres qui sont :

- la configuration des réflexions (parallèle, divergente, sigmoïde, etc...),
- la forme externe (en creux, en butte, drapante, etc...),
- les paramètres internes des réflexions (amplitude, fréquence, etc...).

La reconnaissance des faciès sismiques dans une zone géologique donnée est très importante car elle renseigne utilement sur les types de dépôts sédimentaires et la lithologie attendue notamment.

Pour parvenir à reconnaître le ou les faciès sismiques d'une zone géologique donnée, il est donc nécessaire de définir chacun d'eux d'abord en étudiant séparément au moins chacune des trois familles de définition rappelées ci-dessus, puis de faire la synthèse desdites études afin de rassembler le maximum de données ou d'informations sur les faciès sismiques présents dans ladite zone géologique.

Le coût d'un tel traitement et les moyens à mettre en oeuvre, notamment les moyens informatiques sont très élevés et disproportionnés par rapport aux résultats obtenus.

En effet, lorsque les faciès sismiques qu'on souhaiterait reconnaître appartiennent à des biseaux stratigraphiques et/ou à des chenaux du type turbiditique, il est très difficile de procéder à une discrimination entre les anomalies quand elles apparaissent sur les sections sismiques usuelles même lorsque ces anomalies sont reconnues par la sismique de puits comme étant présentes dans la zone concernée, à condition bien entendu qu'un puits soit disponible dans cette zone, ce qui peut ne pas être le cas.

Dans EP-0 561 492, il est décrit une méthode pour l'amélioration du log de puits et qui fait appel à des réseaux de neurones Le réseau particulier préconisé est un réseau à couches. Toutefois, et du point de vue statistique, un réseau à couches est un approximateur universel des frontières entre classes mais surtout un réseau supervisé, c'est-à-dire que la grandeur obtenue en sortie du réseau de neurones est comparée à une grandeur connue et déterminée par d'autres procédés et ceci jusqu'à une coïncidence ou quasi-coïncidence des grandeurs entre elles.

Depuis que les cartes topologiques dues à KOHONEN sont utilisées dans d'autres domaines, notamment dans le domaine médical afin de déterminer des modèles susceptibles d'imiter quelques unes des fonctions du cerveau en reproduisant certaines de ses structures de base, les géophysiciens ont tenté d'en faire application dans le domaine de la géophysique.

Pour des applications particulières, on peut citer US-5 373 486 qui traite de la classification d'événements sismiques en utilisant des réseaux antagonistes de KOHONEN ; US-5 355 313 qui traite de l'interprétation de données aéromagnétiques ; US-5 181 171 qui décrit un réseau neuronal interactif adapté pour la détection des arrivées premières sur les traces sismiques et l'article dans : Proceedings of SPIE ; Applications of artificial neural networks III, vol. 1709, n⁰ 2, 21-24 April 1992, Orlando, FA, U.S.A, pp. 963-972 : Parikh et al.: "Selective detection of linear features in geological remote sensing data", qui traite de l'extraction et de la classification d'événements sismiques dans des cartes géologiques, au moyen de réseaux neuronnaux.

La présente invention a pour but de proposer une méthode de reconnaissance de faciès sismiques à partir d'une section sismique associée à une zone géologique et ce, automatiquement à l'aide d'un réseau neuronal non supervisé.

La présente invention a pour objet une méthode de reconnaissance de faciès sismiques entre deux horizons ou autour d'un horizon d'une zone géologique et qui consiste à :

- déterminer un nombre donné de faciès sismiques à reconnaître ;
- prendre un ensemble de portions de trace sismique concernant ladite zone ;
- définir un paramètre de reconnaissance de faciès commun à toutes les portions de trace et déterminer la valeur dudit paramètre pour chacune des portions de trace de l'ensemble ;
- sélectionner des portions de trace parmi ledit ensemble ;
- choisir un réseau neuronal unidimensionnel renfermant autant de cellules que de faciès à reconnaître, chaque cellule étant affectée d'une valeur du paramètre de reconnaissance ;
- effectuer l'apprentissage du réseau neuronal à l'aide des portions de trace sélectionnées, de sorte qu'en fin d'apprentissage chaque cellule corresponde à un faciès à reconnaître, et que lesdits faciès soient ordonnés graduellement ;

- présenter chaque portion de trace dudit ensemble à traiter au réseau neuronal classé et ordonnancé, et

- affecter à chacune des portions de trace présentée au réseau le numéro de la cellule la plus proche.

Un avantage de la présente invention est qu'il est possible maintenant de mettre en évidence par exemple une variation de faciès sismique correspondant à un biseau stratigraphique ou à des linéaments pouvant être interprétés comme des failles.

Selon une autre caractéristique, le réseau neuronal est du type non supervisé et consiste notamment en une carte topologique de KOHONEN à une dimension.

Selon une autre caractéristique, les portions de trace comprennent un même nombre d'échantillons et le paramètre de reconnaissance est défini par la séquence des échantillons comprise entre les deux horizons ou autour dudit horizon délimités sur une section sismique.

Selon une autre caractéristique, à partir des portions de trace on détermine un paramètre global de reconnaissance commun à toutes les portions de trace.

Selon une autre caractéristique, chaque faciès est affecté d'un code couleur, les différentes couleurs étant ordonnées graduellement dans une plage de couleurs donnée avec une variation lente de teinte entre deux couleurs consécutives quelconques de ladite plage.

Selon une autre caractéristique, les faciès sismiques reconnus sont représentés sur une carte avec leur couleur correspondante.

Un autre avantage de la présente invention réside dans le fait qu'en fonction des connaissances générales sur la zone géologique à étudier et obtenues par d'autres moyens, il est possible d'utiliser des attributs associés aux traces sismiques et qui sont issus soit de la séquence d'échantillons entre le toit et la base de l'élément de trace, c'est-à-dire en fait, entre deux horizons ou autour d'un horizon de ladite zone, soit des paramètres statistiques globaux significatifs de la distribution des échantillons dans la zone géologique concernée, lesdits paramètres globaux pouvant être par exemple l'amplitude, la fréquence, la vitesse d'intervalle, etc...

D'autres avantages et caractéristiques ressortiront mieux à la lecture de la description relative à la méthode selon l'invention, ainsi que des dessins annexés sur lesquels :

- la figure 1 représente une section sismique sur laquelle est délimité un chenal turbiditique autour d'un horizon marqué,

- la figure 2 représente schématiquement une carte topologique finale obtenue selon l'invention,

- la figure 3 représente schématiquement une carte des faciès sismiques associés à la zone géologique correspondant à l'ensemble des portions de traces sismiques traité.

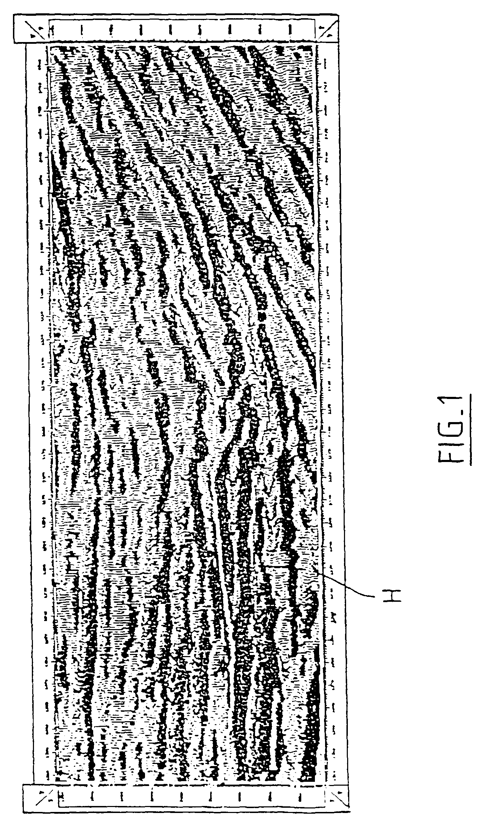

La méthode selon la présente invention utilise un réseau neuronal non supervisé à une dimension qui comprend autant de cellules que de faciès sismiques à reconnaître dans une zone géologique donnée, entre deux horizons ou autour d'un horizon, déterminés par pointé sur une section sismique qui comprend un grand nombre de traces sismiques de l'ordre de plusieurs centaines au moins, par exemple autour de l'horizon H de la figure 1. On délimite sur lesdites traces un ensemble de portions de traces sismiques qui sont limitées par lesdits horizons ou autour dudit horizon, ces portions de trace sismique étant utilisées pour la réalisation d'une carte topologique de la manière indiquée ci-après.

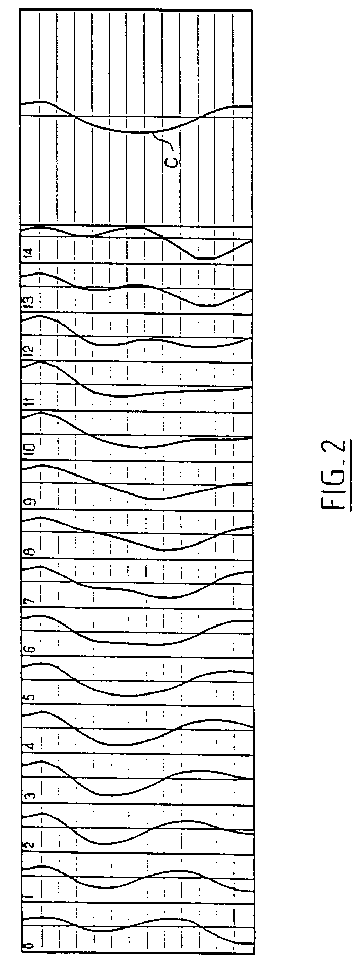

Dans une autre étape, on définit un paramètre de reconnaissance de faciès sismique, lequel paramètre est commun à toutes les portions de trace. Dans le cas de la figure 2, le paramètre est défini par la forme du signal. Dans l'exemple illustré, on a 15 formes de signal numérotées de 0 à 14, chacune correspondant à un faciès sismique. Bien entendu, deux formes de signal peuvent être proches l'une de l'autre ; cela signifierait que les faciès sismiques correspondant sont de même nature et/ou continus. On détermine la valeur du paramètre de reconnaissance qui, dans l'exemple de la forme de signal, est constitué par la séquence des échantillons sur la portion de trace considérée. Chaque portion de trace est échantillonnée de la même façon c'est-à-dire comporte le même nombre d'échantillons, l'amplitude des échantillons pouvant être variable d'un échantillon à l'autre dans une même séquence ou pour des séquences différentes.

Parmi l'ensemble des portions de trace à traiter, on sélectionne un certain nombre de portions de trace, par exemple en sélectionnant une portion de trace sur 4 ou en procédant à une sélection aléatoire ou pseudo-aléatoire.

Dans une autre étape, on effectue l'apprentissage du réseau neuronal à l'aide des portions de trace sélectionnées de sorte qu'en fin d'apprentissage, chaque cellule corresponde à un faciès à reconnaître ; c'est ce qui est représenté sur la figure 2, sur laquelle les 15 cellules numérotées 0 à 14 correspondent au nombre donné de 15 faciès à reconnaître, chaque faciès étant déterminé par la forme du signal représenté dans l'une des 15 classes correspondant aux 15 faciès à reconnaître. Afin d'atteindre le double objectif de classer et d'ordonnancer les classes entre elles, on réalise l'apprentissage suivant.

Soit E l'ensemble des portions de trace sélectionnées à classer et M l'ensemble des cellules de la carte topologique.

Dans une première phase d'apprentissage, les poids des cellules de la carte topologique sont initialisés d'une manière aléatoire.

Dans une deuxième phase, on recherche dans la carte topologique quelle est, pour chaque portion de trace $E_i$ de l'ensemble E, la cellule $M_i$ la plus proche de $E_i$, puis on met à jour les poids des cellules $M_j$ appartenant au voisinage de la cellule $M_i$.

Cette phase est représentée par la formule suivante :

$$M_j(t) = M_j(t-1) + f[\varepsilon(t), d, \sigma(t)]*[E_i(t)-M_j(t-1)]$$

dans laquelle :

$$[\varepsilon(t), d, \sigma(t)] = \varepsilon(t)* \exp[(-d^2/\sigma^2(t)]$$

d étant la distance entre la cellule $M_i$ et la cellule $M_j$
$\sigma(t)$ étant un paramètre de voisinage,
$\varepsilon(t)$ étant un facteur de gain,

Selon une caractéristique de l'invention, $\varepsilon(t)$ est inférieur à 1 et, de préférence égal à 0,7 à la première itération, $\varepsilon(t)$ et $\sigma(t)$ décroissant après chaque cycle de présentation des portions de trace ou itération. Les itérations sont considérées comme terminées lorsqu'on a atteint la convergence souhaitée, c'est-à-dire lorsqu'une nouvelle présentation des portions de trace sélectionnées ne modifie pas ou modifie très peu l'ordonnancement des cellules.

Lorsque l'apprentissage est terminé, on présente à la carte topologique, toutes les portions de traces à traiter de manière à les classer et les ordonnancer par rapport aux classes définies dans ladite carte topologique.

A chaque portion de trace présentée à la carte topologique, on affecte le numéro de la cellule qui lui correspond c'est-à-dire celle dont la forme du signal est la plus proche de la forme du signal de ladite portion de trace présentée.

Préalablement à ladite présentation de toutes les portions de trace et dans une forme préférée de l'invention, on affecte à chaque classe ou cellule de la carte topologique une couleur déterminée au lieu d'un numéro. Les 15 cellules numérotées de 0 à 14 sur la carte topologique de la figure 2 peuvent correspondre à 15 couleurs différentes qui vont graduellement par exemple du marron (classe 0) au violet (classe 14), les divers tons d'une même couleur ayant pour signification que les classes correspondantes sont proches l'une de l'autre. La figure 2 représente également, sur la droite, une portion C de trace à classer. Lorsqu'elle est présentée à la carte topologique, elle vient se classer dans la cellule 7 ou à la rigueur dans la cellule 6 qui correspond sensiblement à un faciès proche de celui défini par la cellule 7.

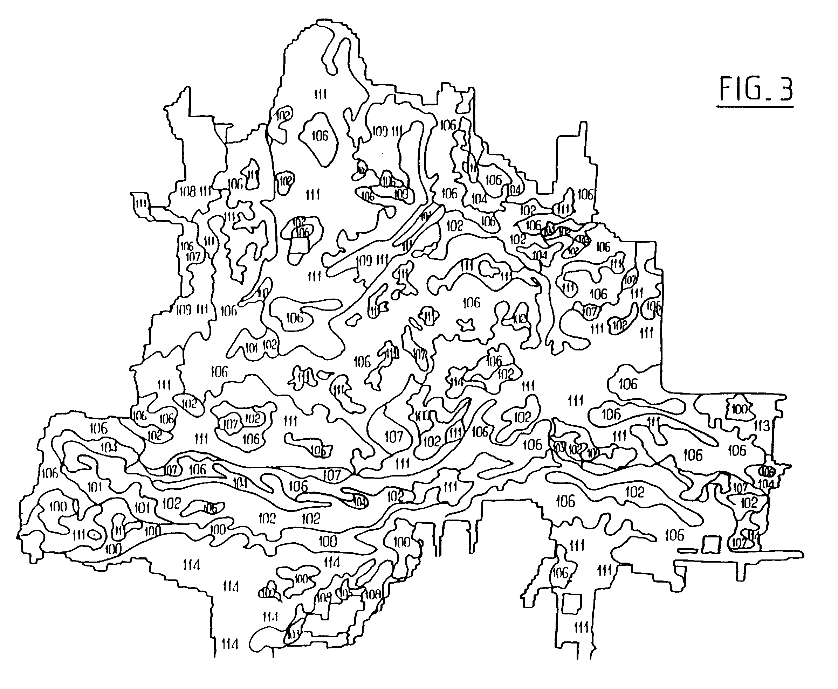

La figure 3 représente schématiquement la carte des faciès sismiques de la zone ou couche géologique étudiée, chaque faciès sismique correspondant à l'une des classes 0 à 14 de la carte topologique finale. On peut constater que des classes différentes s'imbriquent et/ou sont comprises dans d'autres classes. Les références 100 à 114 correspondent respectivement aux classes 0 à 14 de la carte topologique de la figure 2.

**Revendications**

1. Méthode de reconnaissance automatique de faciès sismiques entre deux horizons ou autour d'un horizon d'une zone géologique donnée, consistant à :

   - déterminer un nombre donné de faciès sismiques à reconnaître ;
   - prendre un ensemble de portions de trace sismique concernant ladite zone ;
   - définir un paramètre de reconnaissance de faciès commun à toutes les portions de trace et déterminer la valeur dudit paramètre pour chacune des portions de trace de l'ensemble ;
   - sélectionner des portions de trace parmi ledit ensemble ;
   - choisir un réseau neuronal unidimensionnel renfermant autant de cellules que de faciès à reconnaître, chaque cellule étant affectée d'une valeur du paramètre de reconnaissance ;
   - effectuer l'apprentissage du réseau neuronal à l'aide des portions de trace sélectionnées, de sorte qu'en fin d'apprentissage chaque cellule corresponde à un faciès à reconnaître, et que lesdits faciès soient ordonnés graduellement ;
   - présenter chaque portion de trace dudit ensemble à traiter au réseau neuronal classé et ordonnancé, et
   - affecter à chacune des portions de trace présentée au réseau le numéro de la cellule la plus proche.

2. Méthode selon la revendication 1, caractérisée en ce que le réseau neuronal est un réseau non supervisé.

3. Méthode selon la revendication 2, caractérisée en ce que le réseau neuronal non supervisé est une carte topologique de KOHONEN à une dimension.

4. Méthode selon la revendication 1, caractérisée en ce que les portions de trace comprennent un même nombre d'échantillons et en ce que le paramètre de reconnaissance est défini par la séquence des échantillons comprise entre les deux horizons ou autour dudit horizon.

5. Méthode selon la revendication 1, caractérisée en ce qu'on détermine un paramètre global de reconnaissance commun à toutes les portions de trace.

6. Méthode selon la revendication 1, caractérisée en ce que chaque cellule correspond à une classe qui est affectée d'un code couleur, les différentes couleurs étant ordonnées graduellement dans une plage de couleurs donnée avec une variation lente de teinte entre deux couleurs consécutives quelconques de ladite plage.

7. Méthode selon les revendications 1 et 6, caractérisée en ce que les faciès sismiques reconnus sont représentés sur une carte avec leur couleur correspondante.

## Patentansprüche

1. Verfahren zur automatischen Erkennung von seismischen Mustern zwischen zwei Horizonten oder in der Umgebung eines Horizonts einer gegebenen geologischen Zone, bestehend aus:

   - einem Bestimmen einer gegebenen Anzahl von zu erkennenden seismischen Mustern;
   - einem Herausgreifen einer Gesamtheit von diese Zone betreffenden seismischen Spurabschnitten;
   - einem Definieren eines für alle Abschnitte gemeinsamen Muster-Erkennungsparameters und einem Bestimmen des Wertes des Parameters für jeden der Spurabschnitte der Gesamtheit;
   - einem Aussuchen von Spurabschnitten aus der Gesamtheit;
   - einem Auswählen eines eindimensionalen neuronalen Netzes, das ebenso viele Zellen umfaßt, wie die zu erkennenden Muster, wobei jede Zelle einem Wert des Erkennungsparameters zugeordnet wird;
   - einem Durchführen einer Lernphase des neuronalen Netzes mit Hilfe der ausgesuchten Spurabschnitte, derart, daß am Ende der Lernphase jede Zelle einem zu erkennenden Muster entspricht und daß die Muster graduell geordnet sind;
   - einem Darstellen jedes Spurabschnitts der auf dem klassifizierten und geordneten neuronalen Netz zu bearbeitenden Gesamtheit und
   - einem Zuordnen zu jedem der auf dem Netz dargestellten Spurabschnitte der Zahl der am nächsten liegenden Zelle.

2. Verfahren nach Anspruch 1, dadurch gekennzeichnet, daß das neuronale Netz ein nicht-kontrolliertes Netz ist.

3. Verfahren nach Anspruch 2, dadurch gekennzeichnet, daß das nicht-kontrollierte neuronale Netz eine topologische Karte nach KOHONEN mit einer Dimension ist.

4. Verfahren nach Anspruch 1, dadurch gekennzeichnet, daß die Spurabschnitte eine gleiche Anzahl von Mustern umfassen und daß der Erkennungsparameter durch die Sequenz der Muster zwischen den beiden Horizonten oder in der Umgebung des Horizonts definiert wird.

5. Verfahren nach Anspruch 1, dadurch gekennzeichnet, daß ein für alle Spurabschnitte gemeinsamer, globaler Erkennungsparameter bestimmt wird.

6. Verfahren nach Anspruch 1, dadurch gekennzeichnet, daß jede Zelle einer Klasse entspricht, die einem Farbwert zugeordnet wird, wobei die unterschiedlichen Farben in einem gegebenen Farbbereich mit einer leichten Variation einer Tönung zwischen zwei beliebig aufeinander folgenden Farbwerten des Bereichs abgestuft geordnet werden.

7. Verfahren nach den Ansprüchen 1 und 6, dadurch gekennzeichnet, daß die erkannten seismischen Muster mit ihrer entsprechenden Farbe auf einer Karte dargestellt werden.

## Claims

1. A method for the automatic recognition of seismic facies between two horizons or about a horizon of a given geological area, consisting in:

   · determining a given number of seismic facies to be recognized,
   · taking a set of seismic trace portions concerning said area,
   · defining a facies recognition parameter common to all the trace portions and determining the value of said parameter for each of the trace portions of the set,
   · selecting trace portions from said set,
   · choosing a one-dimensional neural network containing as many cells as facies to be recognized, each cell being assigned a value of the recognition parameter,
   · effecting the learning of the neural network via the selected trace portions, so that, when the learning process is complete, each cell corresponds to a facies to be recognized, and so that said facies are gradually ordered,
   · presenting each trace portion of said set to be processed to the classed and ordered neural network, and
   · assigning the No. of the nearest cell to each of the trace portions presented to the network.

2. The method of Claim 1, characterized in that the neural network is an unsupervised network.

3. The method of Claim 2, characterized in that the unsupervised neural network is a one-dimensional Kohonen topological map.

4. The method of Claim 1, characterized in that the trace portions comprise the same number of samples and further in that the recognition parameter is defined by the sequence of samples comprised between the two horizons or about said horizon.

5. The method of Claim 1, characterized in that an overall recognition parameter is determined which is common to all the trace portions.

6. The method of Claim 1, characterized in that each cell corresponds to a class which is assigned a color code, the different colors being gradually ordered in a given range of colors with a slow variation in shade between any two consecutive colors of said range.

7. The method of one of Claims 1 and 6, characterized in that the recognized seismic facies are represented on a map with their corresponding color.

FIG.1

FIG. 2

FIG. 3